# EUROPEAN PATENT SPECIFICATION

(11) **EP 2 385 656 B1**
(45) Date of publication and mention of the grant of the patent: **12.12.2012**
(21) Application number: 10004798.4
(22) Date of filing: 06.05.2010
(51) Int. Cl.: H04L 12/24, H04L 29/08

(54) **Method and system for controlling data communication within a network**
Verfahren und System zur Steuerung der Datenübertragung in einem Netz
Procédé et système pour contrôler la communication de données dans un réseau

(43) Date of publication of application: 09.11.2011
(73) Proprietor: Deutsche Telekom AG, 53113 Bonn (DE)
(72) Inventor: Poese, Ingmar, 10553 Berlin (DE); Frank, Benjamin, 12555 Berlin (DE); Smaragdakis, Georgios, 14052 Berlin (DE); Feldmann, Anja, 10717 Berlin (DE)
(74) Representative: Kampfenkel, Klaus

(56) References cited:
- WO-A1-2009/092440
- US-A1- 2009 168 768
- US-B1- 7 103 664
- US-B1- 7 254 626

## Description

### Field of the invention

The invention relates to communication networks in general, and especially to a method and a system for controlling data communication within a network, wherein in particular recommendations are provided with respect to the choice of source-destination pairs in the network.

### Background of the invention

In contemporary communication infrastructures, IP-based computer networks play a prominent role. The deployment of these networks is progressing at an exponential rate as different kinds of participants such as corporations, public authorities and individuals, rely on sophisticated and complex services and communication systems.

Presently server or peer selection methods are primarily based on active measurements that are initiated by users, e.g. by using ping, trace-route or available bandwidth estimation tools, which are often inaccurate and/or add load to the end user. Further selection methods comprise utilizing geographical information, utilizing available landmarks to create virtual coordinating systems, following recommendations and redirection by content providers or distributors based on random source selection, source selection based on load balancing, or source selection based on economic interest or contract agreements. In all the above mentioned cases the information is not supported by the network providers, and the success of the above schemes requires the dependence to already available infrastructure by other peers, service providers, and other third parties that do not have an accurate view of the network and may have conflicting objectives compared to those of the users.

A network provider such as an Internet Service Provider (ISP) is interested in achieving traffic engineering goals and in improving user experience and applications efficiency. An exemplary known technique for achieving such goals is load balancing, wherein workload is distributed across two or more computers or network links in a network, thereby improving for instance resource utilization, throughput or response time. Load balancing commonly is employed for popular web sites, Internet Relay Chat networks, high-bandwidth File Transfer Protocol sites and DNS servers (DNS: Domain Name System), wherein typically a load balancer is utilized which forwards requests from clients to one of multiple backend servers.

It is also common that multiple IP addresses are associated with a single domain name, wherein the response to a DNS request comprises a list of IP addresses of several servers that host an identical service. A method of load balancing in this respect is round robin DNS, wherein the IP address sequence in the list is permuted with each DNS response. Round robin DNS however has the disadvantage that it merely alternates the order of addresses each time a DNS server is queried, so that an essentially even load balancing between the servers is achieved which often is not the optimum.

In US 7 254 626 B1 a global server load-balancing (GLSB) switch is described which serves as a proxy to an authoritative domain name server (DNS) and communicates with site switches that are coupled to host servers, wherein the GLSB switch returns one or more ordered IP addresses for a host name, when a client program requests a resolution of a host name, wherein the IP addresses are ordered using metrics that include information collected from the site switches.

From WO 2009/092440 A1 a method and apparatus for selecting a network resource from a plurality of network resources in a communications network is known, wherein a selection node receives a DNS request for a server or a gateway from a requestor, and then retrieves, from at least one further network resource, data relating to the plurality of network resources, selects the most appropriate server/gateway based on criteria such as status, capability, functionality, transport information and service-specific information and returns a single IP address to the requestor.

It is therefore an object of the present invention to show a new and improved way for controlling data communication within a communication network, in particular within a computer network. A further object of the invention is to show a new and improved way to enable a network provider to perform traffic engineering in a network, such as reducing the congestion in heavy loaded links, bypass links that are down or reduce transit costs.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for controlling data communication within a network comprises the step of a central network element associated with a network provider generating a representation of the network by retrieving network information and/or by monitoring data communication within the network. Changes in the network are detected by continuously retrieving network information and/or monitoring data communication within the network and the representation of the network is accordingly updated depending on the detected changes. The network may be any network with multiple network elements which for the purpose of data communication are interconnected, in particular the Internet. The central network element typically is a server or a group of servers operated by the network provider. The representation of the network preferably comprises information associated with nodes of the network and/or information associated with communication paths between pairs of nodes of the network. Preferably performance characteristics of the communication paths are calculated and a representation is maintained for fast access. With advantage the network information gathered in the central network element comprises raw network information, for instance physical information, monitoring information, policy information and/or meta-information. With advantage this information is processed and a detailed annotated network representation is built and maintained.

The method further comprises the step of transmitting a request to the central network element from a client network element, wherein said request comprises information which identifies a source network element and at least two destination network elements. For each identified destination network element a ranking value for the communication path between the source network element and the respective destination network element is determined by the central network element based on the representation of the network, an ordered list of the identified destination network elements is generated based on the respective ranking values, said ordered list is transmitted to the client network element from the central network element, and based on the ordered list at least one of the destination network elements is selected for data communication with the source network element.

For the terms client network element, source network element and destination network element in the following also simply the terms client, source and destination are used respectively. The terms are used essentially interchangeably, defining a respective hardware or software unit or an identification thereof. The term user in the following typically refers to the client network element. The terms source and destination are used to define two endpoints of a data communication in the network, wherein the direction of the data communication is not limited to the one or the other direction. Typically however the data communication is initiated by the source.

A basic idea of the invention is the gathering, processing and maintaining of network information within a network provider, wherein the information that is maintained is used to estimate ranking values for source-destination pairs, so that a request comprising at least two candidate destinations is responded to with a recommendation in the form of a ranked list to improve traffic engineering in the network, user experience, and applications efficiency. The ranking value may preferably be a measure for the proximity of the respective source-destination pair. The source and/or the destination of a source-destination pair may or may not belong to the administrative authority of the network provider. The ranking values with advantage are calculated depending on network performance characteristics such as delay, bandwidth, error delivery, network reliability, congestion, and other characteristics such as type of application, pricing, peering agreements, geographical location, legal issues, regional coverage, restrictions activated by the client, service load utilization. The parameters depending on which the ranking values are calculated are not limited to the ones mentioned above, but may comprise also any other suitable parameter. Source and destination may be identifiers used in network protocols such as the IP address that can be real IPs, sub-networks or access IPs, for instance when behind a Network Address Translation (NAT) or when only router IPs are known. Users are for instance content distribution systems (CDNs), peer-to-peer systems, streaming systems, group of caches, as well as applications based on the client-server model, including server pools, direct download providers, Internet infrastructure such as Domain Name Servers (DNS), as well as authorized servers by other network providers.

In a preferred embodiment of the method the client network element generates the request to be transmitted to the central network element in response to receiving a request from a source network element, wherein the client network element transmits a response to the source network element depending on the ordered list provided by the central network element. This for instance is the case, when the client network element is a DNS server. Requests from such a client network element in the following also are referred to as proxy requests. A special advantage of this embodiment is that no changes in the source network element are needed, since the source network element does not notice the reordering performed in the central network element, which for instance results in a different IP address of a web site received by the source network element than it would have received without the invention.

Alternatively the client network element could at the same time also be the source network element, so that the request is initially generated by the client network element.

Since the requests may be transmitted by different types of network elements relating to different services, typically the requests may have different formats. Therefore, the request transmitted by the client network element preferably is converted into a request of a pre-defined unified format. A request of unified format typically at least comprises identifications of the source network element and of the destination network elements, i.e. the candidate destinations.

In a most preferred embodiment the ranking values are determined by means of a pre-defined ranking function which is selected from a pre-defined set of ranking functions based on information in the request transmitted by the client network element.

This information may for instance be a code value, wherein different code values with advantage are associated with different variants of traffic engineering optimizations, and wherein the optimization is selected by the source network element or by the client network element. When converting a request the code value of course is also adopted into the request of unified format. The code value is mapped to an associated ranking function which is then used for determining the ordered list of destination network elements depending on a mapping table stored in the central network element, wherein the mapping may be performed depending on further parameters. That way the definite ranking functions advantageously are only known to the network provider.

The set of ranking functions and their associated code values preferably are pre-defined and stored in the central network element. For an even enhanced flexibility at least one pre-defined ranking function may also be dynamically adapted depending on detected changes of the network.

A very simple example of a ranking function is the ratio of hop-count and minimal bandwidth of the communication path between the source network element and the respective destination network element. Preferably, however, the pre-defined ranking functions may vary greatly depending on a variety of parameters. With special advantage however, the ranking functions are defined on the basis of information accessible only by the network provider.

Preferably a plurality of requests is analyzed and statistical information is determined on the frequency with which requests are received from individual client network elements and/or on the frequency with which individual source network elements and/or individual destination network elements are identified in the respective requests, and wherein said statistical information is used for determining the ranking values.

Further, the method preferably comprises an admission control, which can for instance be realized by means of at least one access control list. In this preferred embodiment only requests are processed by the central network element which are received from an authorized client network element and which identify an authorized source network element, wherein the authorization of the client network element and/or the source network element is checked depending on an identification of the client network element and/or the source network element comprised in the request.

Access control lists may be provided as positive or as negative lists. For instance a first positive list may be provided comprising subnets from which requests are accepted. A second positive list may for instance list IP addresses from which proxy requests are accepted. Proxy requests are for instance transmitted by a DNS server in the name of a source network element. If the above described statistical information shows that a large number of requests is received in a short period of time, the IP addresses of the respective source network element and/or client network element may be adopted into a negative list, so that such requests are blocked.

In a preferred embodiment of the method a backup of the representation of the network is made at pre-defined times, any detected changes in the network since the last backup are stored, and in case of a failure the representation of the network is retrieved based on the last backup and the stored changes.

An inventive system for controlling data communication within a network with multiple network elements which for the purpose of data communication are interconnected is arranged in at least one central network element associated with a network provider. The system comprises a retrieval sub-system for retrieving network information and/or monitoring data communication within the network, a network map generator sub-system for generating and updating a representation of the network based on data received from the retrieval sub-system, a network map database for storing the representation of the network, a query manager sub-system for receiving, processing and responding to a request from a client network element, wherein said request comprises information which identifies a source network element and at least two destination network elements, a path ranking sub-system which is adapted to determine for each destination network element identified in a request from a client network element a ranking value for the communication path between the source network element and the respective destination network element based on the stored representation of the network, wherein the query manager sub-system is adapted to generate a response to a request and transmit the response to the client network element from which the request was received, wherein said response comprises an ordered list of the destination network elements identified in the request, wherein said list is determined on the basis of respective ranking values provided by the path ranking sub-system.

In mode of service the inventive system preferably gathers and processes raw network information, builds and maintains an annotated map of the network, pre-estimates the path characteristics that are used for the evaluation of arbitrary source-destination pairs that can be mapped or assigned in the network, and provides an interface for fast access to the aforementioned maintained view of the network. In mode of service a user can submit requests and the system preferably admits or rejects the requests. If a request is admitted, the request is further processed, information from the maintained network view is retrieved, aggregated statistics for both the sources and destinations are calculated and every candidate source-destination pair is evaluated. The evaluation is sent to the user as a ranked list, for instance in descending order.

When a request by a user of the system arrives along with a list of candidate destinations, for instance servers or peers to download or upload content, the system utilizes the representation of the network stored in the network map database to estimate the source-destination path characteristics and based on pre-defined or dynamically defined ranking functions responds to the request with an ordered list of destinations to achieve traffic engineering goals and improve user experience and applications efficiency.

Accordingly, the path ranking sub-system preferably is adapted to determine the ranking values by means of a pre-defined ranking function which is selected by the path ranking sub-system from a pre-defined set of ranking functions based on information in the request transmitted by the client network element, wherein with advantage at least one pre-defined ranking function is dynamically adapted depending on detected changes of the network.

In a preferred embodiment the system further comprises a request translator sub-system for converting the request received from the client network element into a request of a pre-defined unified format.

In a further preferred embodiment the system comprises a frequent hitter detection sub-system which is adapted to analyze a plurality of requests and to determine statistical information on the frequency with which requests are received from individual client network elements and/or on the frequency with which individual source network elements and/or individual destination network elements are identified in the respective requests, and wherein said statistical information is provided to the path ranking sub-system for determining the ranking values.

With advantage also a backup sub-system is provided which is adapted to make a backup of the representation of the network at pre-defined times, to store any detected changes in the network since the last backup, and to retrieve the representation of the network based on the last backup and the stored changes in case of a failure.

An inventive network element for communicating with a system as described above is adapted to generate a request, wherein said request comprises information which identifies a source network element and at least two destination network elements, and information for enabling the system to select a ranking function from a set of pre-defined ranking functions, to transmit said request to the system, and to process a response received from the system. Preferably the network element is adapted to generate and transmit the request to the system in response to receiving a request from the source network element, and to transmit a response to the source network element depending on the response received from the system.

At least part of the functionality of the inventive system may preferably be provided by software components. Accordingly, also a digital storage medium lies within the scope of the invention, which comprises electronically readable control instructions adapted to perform, when executed in at least one computer, a method as described above.

### Brief Description of the Figures

It is shown in
- Fig. 1: a schematic view of the components of a preferred embodiment of an inventive system,
- Fig. 2: a schematic view of the a retrieval sub-system of the system shown in Fig. 1,
- Fig. 3: a schematic flowchart of the functionality of a network map generator sub-system of the system shown in Fig. 1,
- Fig. 4: a schematic flowchart of the functionality of a request translator sub-system of the system shown in Fig. 1,
- Fig. 5: a schematic flowchart of the functionality of a query manager sub-system of the system shown in Fig. 1,
- Fig. 6: a schematic flowchart of the functionality of a backup sub-system of the system shown in Fig. 1,
- Fig. 7a: an example of traffic engineering and traffic control for a network of five nodes achieved without employing the system shown in Fig. 1,
- Fig. 7b: an example of traffic engineering and traffic control for a network of five nodes achieved with employing the system shown in Fig. 1,
- Fig. 8a: exemplary an average download speed achieved with and without employing the system shown in Fig. 1, and

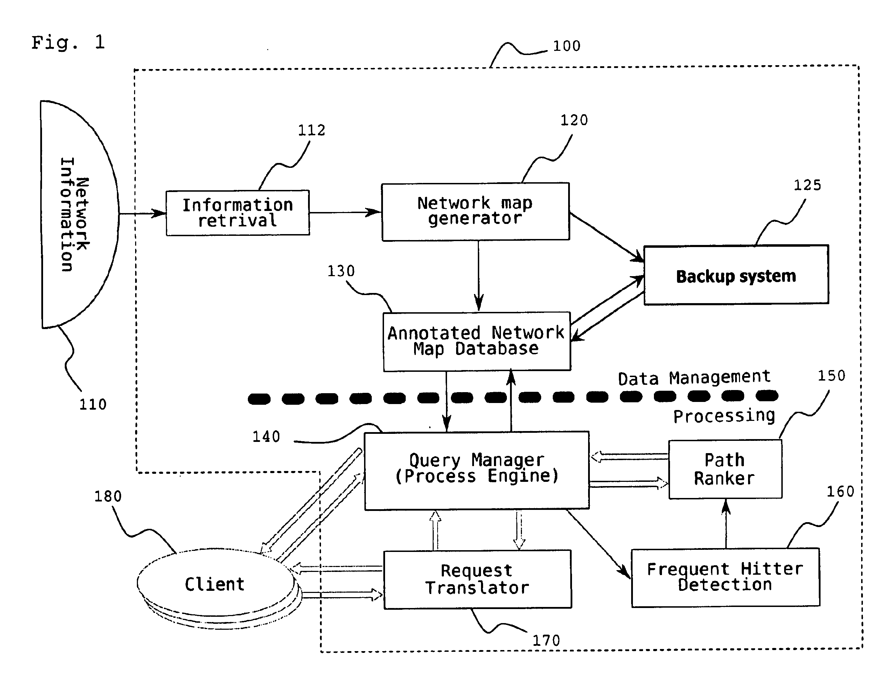

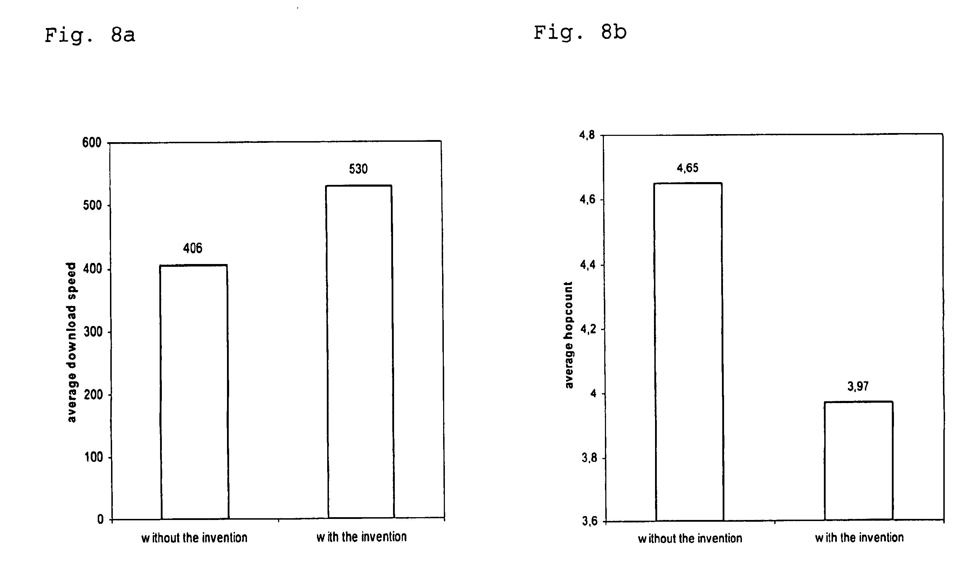

- Fig. 8a: exemplary an average hop-count achieved with and without employing the system shown in Fig. 1.

### Detailed Description of the Invention

Subsequently, preferred but exemplar embodiments of the invention are described in more detail with regard to the figures.

Fig. 1 shows a schematic view of the configuration of the components of a preferred embodiment of an inventive system 100, wherein said components comprise sub-systems for data gathering, data processing, network map building and maintenance, and query processing, ranking, and response sub-systems of the system. The information retrieval sub-system 112 is responsible to gather the raw network information 110 that may involve physical information, monitoring information, policy information, and meta-information in a network provider. The information retrieval sub-system 112 then sends this information to the network map generator 120. The network map generator 120 is responsible to evaluate the level of changes that have taken place in the network, and accordingly builds and updates the annotated network map database 130. The annotated network map database sub-system 130 is responsible to maintain the most accurate view of the network, pre-estimate the various characteristics measures among all the possible sources and destinations that can be mapped in the network, store the results of the processing and make available an interface with the query manager sub-system 140. For failure recovery a backup sub-system 125 is provided which in regular intervals receives a backup of the network map database 130 and also information on changes since the last backup from the network map generator 120, so that in the case of a failure the content of the network map database 130 may be recovered. The above described parts contribute to the data management and maintenance part of the system 100. Processing of requests contributes to the second part of the system 100. A request that is submitted by a client network element 180 may first be processed in the request translator 170. Then the request is admitted or discarded based on pre-defined admission criteria. If the request is admitted a query is submitted to the query manager 140 that is responsible to retrieve all the information related to all source-destination pairs. Alternatively a request of a pre-defined unified format may also be transmitted directly from the client network element 180 to the query manager 140. Aggregated statistics may be maintained for the popularity of sources and destinations by the frequent hitter detector 160. This information is then sent to the path ranker 150 that utilizes all the information received by the query manager 140 and the frequent hitter detector 160 and estimates the related scores to compile the ranked list which is the recommendation. The recommendation then is sent as a response to the client network element 180. The client network element 180 may be a source network element or a proxy such as a DNS server which transmits a request in the name of a source network element.

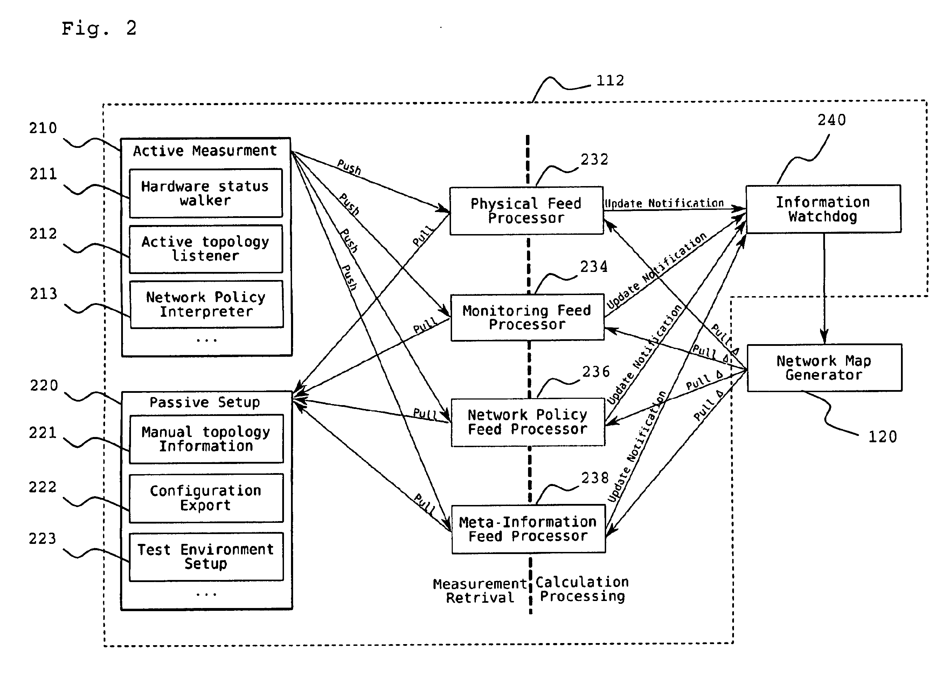

The information retrieval sub-system 112 which is shown in more detail in Fig. 2 comprises two sub-systems, the measurement retrieval sub-system on the left-hand side and the calculation processing sub-system on the right-hand side. Each of the two subsystems can be in either active or passive mode, i.e. can operate either in the push or in the pull mode. In the following the functionality of each mode for each sub-system is described.

In the left-hand side of Fig. 2, a first example of active measurement information sources or seeds 211, 212 and 213 are shown that can be involved in the push process for the measurement retrieval sub-system 210, and also a second example of passive measurement information sources or seeds 221, 222 and 223 are shown that can be involved in the pull process for the measurement retrieval sub-system 220. The active measurement may comprise, but is not limited to, seeds about the hardware status of a network component, a listener for the topology of the network and an active listener of the messages exchanged in the network while a routing protocol is used. The updates of the above mentioned information is sent to a series of feeders that are ready to listen to the updates. These listeners are the physical feed processor 232, the monitoring feed processor 234, the network policy feed processor 236, and the meta-information feed processor 238. These feeders keep the updates. In the passive mode, the above mentioned feeders request for possible updates by querying passive measurement sources that in the shown embodiment are exemplified but not limited to manual topology information 221, configuration export 222 and test environment setup 223.

In the right-hand side of Fig. 2, two examples of active and passive modes are shown that are materialized with push and pull processes respectively for the calculation processing sub-system. In the push mode, each one of the feeders, namely physical feed processor 232, monitoring feed processor 234, network policy feed processor 236, and meta-information feed processor 238 send update notifications, when it receives an update using the push procedure in the measurement retrieval sub-system, to the information watchdog 240 that acts as an update handler that sends a trigger to network map generator 140 to pull updates from the feeds that reported that they are aware of updates. In the pull mode, the network map generator attempts to pull information from the above mentioned feeders periodically.

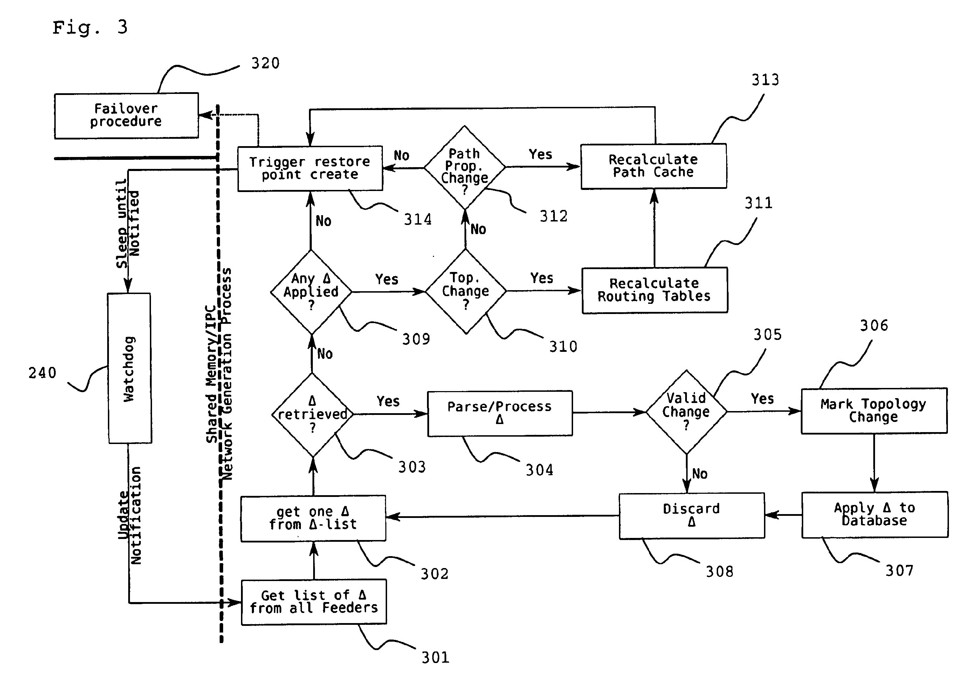

Fig. 3 schematically shows a flowchart comprising steps performed by the network map generator 120 used to pull updated information from feeders as shown in Fig. 2 in order to build and maintain the network map of a network provider. In the push mode described with respect to Fig. 2 the watchdog 240 is responsible to provide the update notification to the network map generator 120. In the pull mode, the network map generator 120 pulls information for the feeders. In both cases, the list of atomic changes in the status of the network is got from all feeders, using pull or push procedures, in step 301. Then every one of the atomic changes is processed in step 302. Each atomic change is retrieved in step 303. If there is an update in hold it is parsed in step 304, then it is checked if this is a valid update in step 305. If it is a valid update then the changes in the topology that is maintained are marked in step 306, and the changes are applied in the database as a transaction in step 307. If the changes are not valid, then the update is discarded in step 308. If there is an update that changed the database, then this is confirmed in step 309. If this is the case then it is checked if there are topological changes in step 310. If so, then the routing tables are recalculated in step 311 and the path cache is also recalculated in step 313. If there are path propagation changes, then the recalculation is pushed to the path cache, if not then a trigger restore point is created in step 314. A trigger restore point is also created if the path cache is recalculated. A failover procedure 320 can be recalled from the trigger restore points.

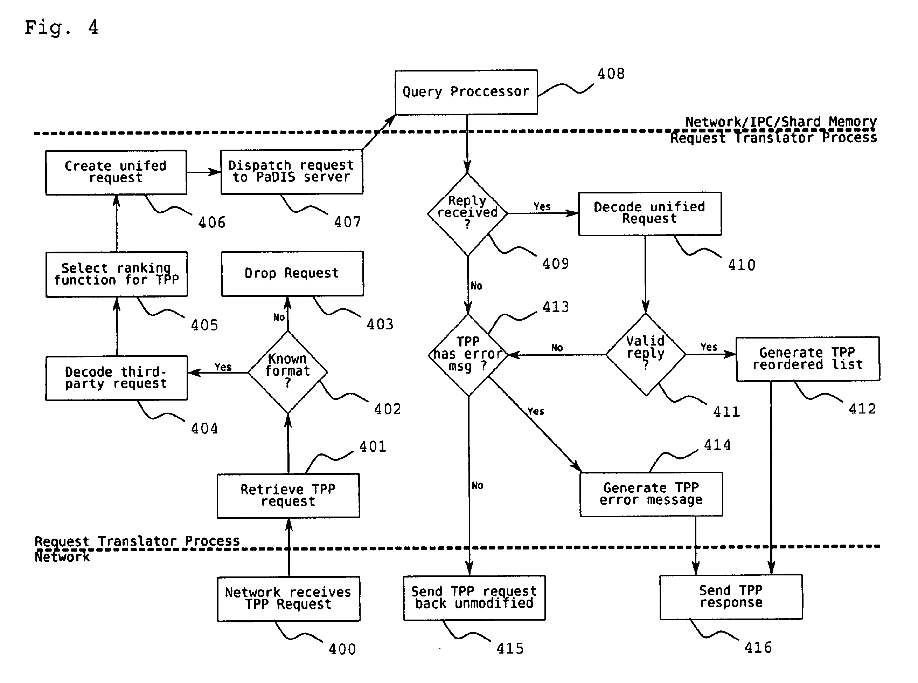

Fig. 4 schematically shows a flowchart comprising steps for translating a submitted request to the system. The request translator system 170 is used for two purposes. First for inter-protocol communication and second to assist the decision of the appropriate ranking function. When the network receives a request in step 400, then the request is sent to the request translator process. The request is retrieved in step 401, it is checked if it is a known format in step 402. If it is not a known format, the request is dropped in step 403. If it is a known format, the request is decoded in step 404, from the decoding information is determined that can be used to select the appropriate ranking function in step 405, then a unified request is created in step 406, a request is dispatched to the query managing server, named PaDIS server in Fig. 4, in step 407 and this request is forwarded to the query processor in step 408 that is in the network or IPC or shared memory. Once the request has been processed by the query processor, the reply is received in step 409. If this is not the case, it is checked if there is a third-party protocol error in step 413. If there is no such error, then an unmodified request is sent back to the client network element in step 415. If a third-party error is found, then there is a generation of a third-party error message in step 414 and a third-party error response is sent in step 416. If the reply is a valid one, a unified request is decoded in step 410, then it is checked if the reply is valid in step 411. If this is not the case, then the same procedure as in step 413 is used. On the other hand, if it is a valid reply, a third-party re-ordered list is generated in step 412 and a third-party protocol response is sent.

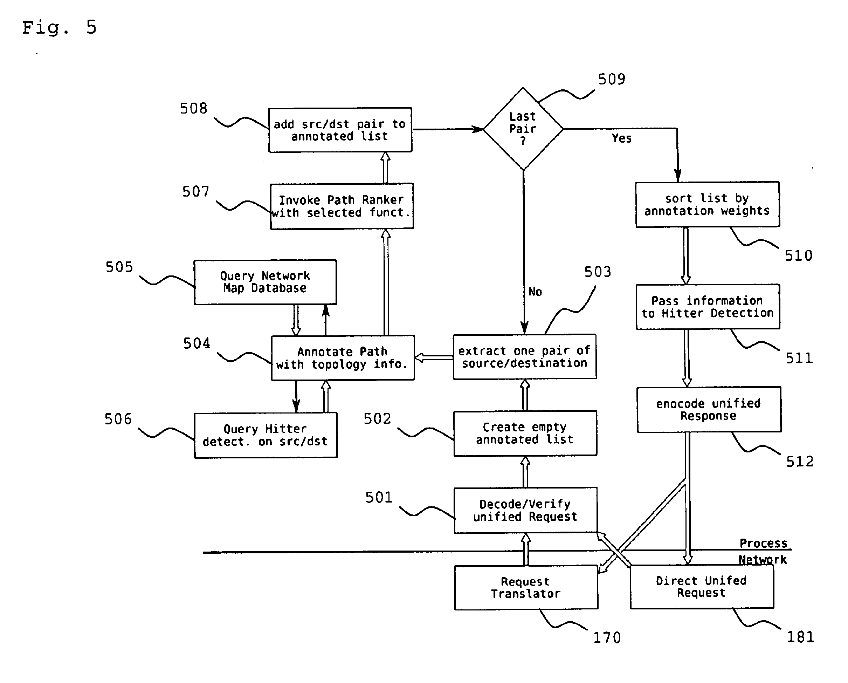

Fig. 5 schematically shows a flowchart comprising steps for managing a submitted request that arrives in the system before the system replies in the query manager sub-system. When a request has been translated by the request translator 170, the unified request is decoded and verified in step 501. In step 501 also an admission control is performed. Alternatively admission control could also be performed by the query manager sub-system. An empty annotated list is created in step 502, one pair of source-destination is extracted in step 503, and an annotated path is compiled with topology information in step 504. This involves querying the network map database in step 505 and the query frequent hitter detector for sources and/or destinations in step 506. Once the annotated path with topology information is retrieved this information along with meta-information that can be used to determine the selection of the ranking function is used to invoke path ranker with selected functionality in step 507. Then, the source-destination pair is added to the annotated list in step 508. It is checked if the pair under investigation is the last one in step 509. If this is not the case, then the next source-destination pair is extracted in step 503. If the source-destination pair is the last, then the annotated weights that are associated with the source-destination pairs are sorted in step 510, the information is passed to the frequent hitter detector sub-system in step 511, a unified response is encoded in step 512 and the encoding is sent to the request translator 170. A direct unified request 181 received directly from a client network element 180 is processed analogously.

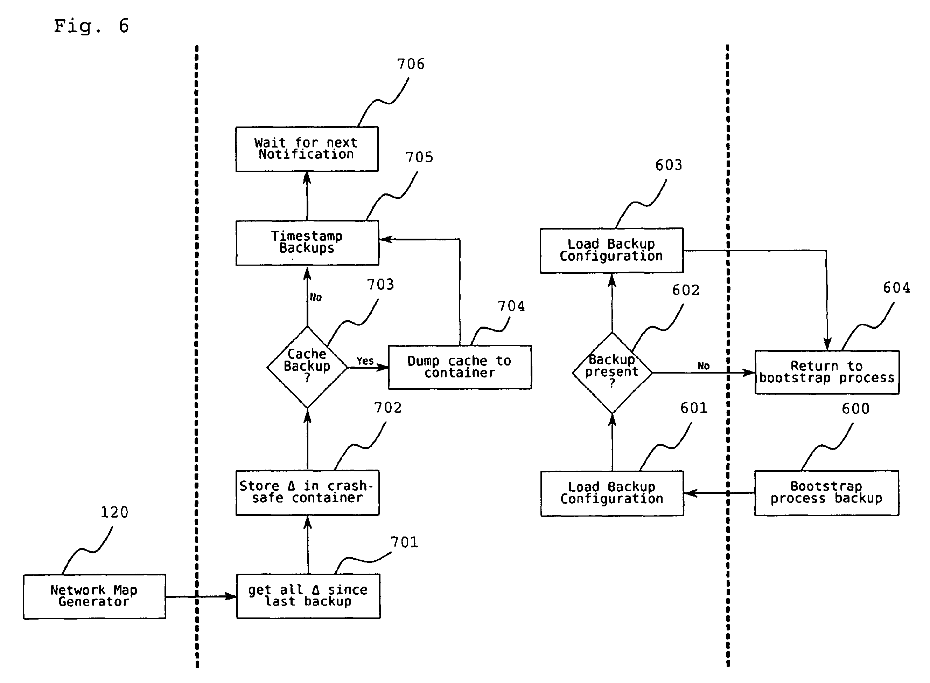

Fig. 6 schematically shows a flowchart comprising steps for a fail recovery sub-system. The main purpose of this sub-system is to resume the last state before failure and infer changes that have taken place in the meantime. There are two components. On the right-hand side the backup retrieval and on the left-hand side the failure-interval update inference and retrieval. The backup retrieval is responsible to load the back-up configuration in step 601 by bootstrapping the appropriate backup process. Then it is checked if there a backup present in step 602. If this is the case, then the backup is retrieved in step 603. If there is no backup, then the process terminates in step 604 and the raw network information gathering is reset. If a backup has been retrieved, then all the atomic changes that are received since the recovery and correspond to changes in the last save state of the network are fed in step 701 and are saved to the crash-safe container in step 702. Then it is checked if there is a backup cache in step 703. If there is one, then the cache is damped to the container in step 704 and then a backup of the timestamps is made in step 705 and the system waits for the next notification in step 706. If there is no cache backup, then a backup of the timestamps is made in step 705.

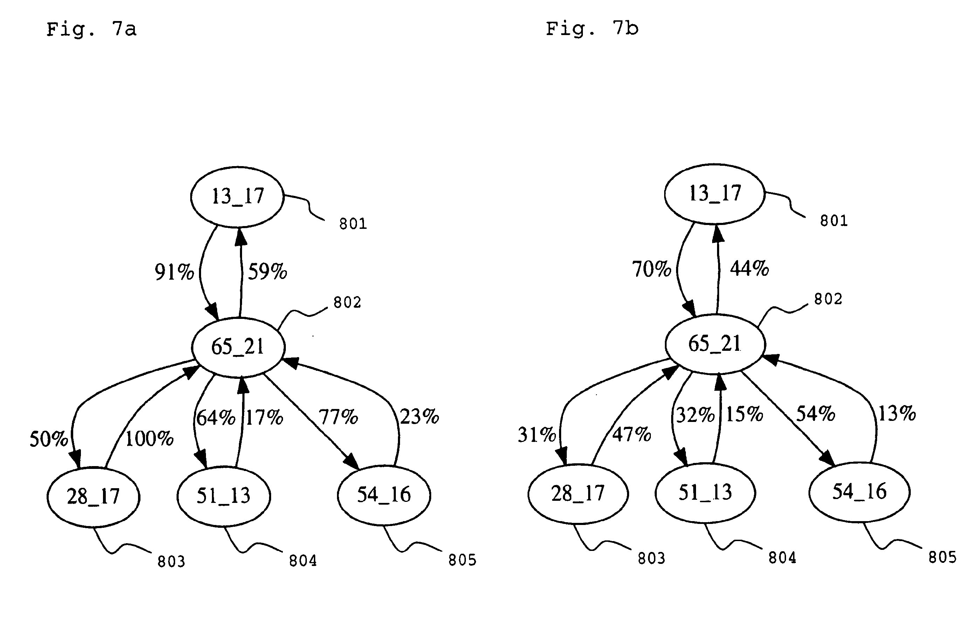

Fig. 7a exemplary shows traffic for a network of five nodes 801-805. Fig. 7b shows for the same example the engineering of traffic that is achieved by the system. The goal is to re-assign the source-destination flows in a way that the total congestion in the network and the peak load per link and direction are reduced. A network of seven hundred nodes is considered focusing on the most congested links -upload and download - that connect five of them, i.e. nodes 801-805. by employing the invention the total traffic that traverses the network is reduced from 560.35 Gigabytes to 455.36 Gigabytes. The average download speed is increased from 406 Kilobits per second to 520 Kilobits per second, when requests are submitted to the inventive system, as also shown in Fig. 8a. The average hop-count per connection, i.e. source-destination pair, is reduced from 4.65 to 3.97, as also shown in Fig. 8b. It is noted that some hops are not shown in the figures 7a and 7b. Figures 7a and 7b also show that the traffic in heavy load links is reduced. For example, the load of the link from 28_17 to 65_21 is reduced from 100% to 47%, the load of the link 13_17 to 65_21 is reduced from 91% to 70%, and the load from 65_21 to 54_16 is reduced from 77% to 54%.

Presently gathering, processing and maintenance of information is not centralized and is not used for active traffic engineering and server or peer selection in a network provider. Each of these components operates independently and is primarily used for network planning, monitoring, and billing. Attempts to enhance source-destination matching include the distribution of raw network information involving third parties or direct push/pull procedures by users that have not been largely deployed due to sensitivity of raw information from the network provider side. Other attempts to enhance source-destination matching include the centralized storage of similar requests to content providers and distributors and the correlation of the source recommendations to infer user proximity. This also lacks critical network provider information. In contrast the invention advantageously provides recommendations based on a detailed view of the network without revealing sensitive network information.

## Claims

1. A method for controlling data communication within a network with multiple network elements which for the purpose of data communication are interconnected, wherein
- a central network element (100) associated with a network provider generates a representation (130) of the network by retrieving network information (110) and/or by monitoring data communication within the network, wherein said representation of the network comprises information associated with communication paths between pairs of nodes of the network,
- changes in the network are detected by continuously retrieving network information (110) and/or monitoring data communication within the network and the representation (130) of the network is updated depending on the detected changes,
- from a client network element (180) a request is transmitted to the central network element (100), wherein said request comprises information which identifies a source network element and at least two destination network elements,
- for each identified destination network element a ranking value for the communication path between the source network element and the respective destination network element is determined by the central network element (100) based on the representation (130) of the network,
- an ordered list of the identified destination network elements is generated based on the respective ranking values,
- said ordered list is transmitted to the client network element (180) from the central network element (100), and
- based on the ordered list at least one of the destination network elements is selected for data communication with the source network element.

2. The method of claim 1, wherein the client network element generates the request to be transmitted to the central network element (100) in response to receiving a request from the source network element, and wherein the client network element transmits a response to the source network element depending on the ordered list provided by the central network element (100).

3. The method of any one of claims 1 or 2, wherein the request transmitted by the client network element (180) is converted into a request of a pre-defined unified format.

4. The method of any one of the preceding claims, wherein only requests are processed by the central network element (100) which are received from an authorized client network element and which identify an authorized source network element, and wherein the authorization of the client network element and/or the source network element is checked depending on an identification of the client network element and/or an identification of the source network element comprised in the request.

5. The method of any one of the preceding claims, wherein the ranking values are determined by means of a pre-defined ranking function which is selected from a pre-defined set of ranking functions based on information in the request transmitted by the client network element.

6. The method of claim 5, wherein at least one pre-defined ranking function is dynamically adapted depending on detected changes of the network.

7. The method of any one of the preceding claims, wherein a plurality of requests is analyzed and statistical information is determined on the frequency with which requests are received from individual client network elements and/or on the frequency with which individual source network elements and/or individual destination network elements are identified in the respective requests, and wherein said statistical information is used for determining the ranking values.

8. A system for controlling data communication within a network with multiple network elements which for the I purpose of data communication are interconnected, said system being arranged in at least one central network element (100) associated with a network provider, comprising
- a retrieval sub-system (112) for retrieving network information (110) and/or monitoring data communication within the network,
- a network map generator sub-system (120) for generating and updating a representation of the network based on data received from the retrieval sub-system, wherein said representation of the network comprises information associated with communication paths between pairs of nodes of the network,
- a network map database for storing the representation (130) of the network,
- a query manager sub-system (140) for receiving, processing and responding to a request from a client network element (180), wherein said request comprises information which identifies a source network element and at least two destination network elements,
- a path ranking sub-system (150) which is adapted to determine for each destination network element identified in a request from a client network element (180) a ranking value for the communication path between the source network element (180) and the respective destination network element based on the stored representation (130) of the network, wherein
- the query manager sub-system (140) is adapted to generate a response to a request and transmit the response to the client network element (180) from which the request was received, wherein said response comprises an ordered list of the destination network elements identified in the request, and wherein said list is determined on the basis of respective ranking values provided by the path ranking sub-system (150).

9. The system of claim 8, further comprising a request translator sub-system (170) for converting a request received from the client network element (180) into a request of a pre-defined unified format.

10. The system of any one of claims 8 or 9, wherein the path ranking sub-system (150) is adapted to determine the ranking values by means of a pre-defined ranking function which is selected by the path ranking sub-system (150) from a pre-defined set of ranking functions based on information in the request transmitted by the client network element (180).

11. The system of claim 10, wherein at least one pre-defined ranking function is dynamically adapted depending on detected changes of the network.

12. The system of any one of claims 8 to 11, further comprising a frequent hitter detection sub-system which is adapted to analyze a plurality of requests and to determine statistical information on the frequency with which requests are received from individual client network elements and/or on the frequency with which individual source network elements and/or individual destination network elements are identified in the respective requests, and wherein said statistical information is provided to the path ranking sub-system (150) for determining the ranking values.

13. The system of any one of claims 8 to 12, comprising a backup sub-system which is adapted to make a backup of the representation (1β0) of the network at pre-defined times, to store any detected changes in the network since the last backup, and to retrieve the representation (130) of the network based on the last backup and the stored changes in case of a failure.

14. A network element for communicating with a system for controlling data communication according to any of claims 8 to 13, adapted to
- generate a request, wherein said request comprises information which identifies a source network element and at least two destination network elements, and information for enabling the system to select a ranking function from a set of pre-defined ranking functions,
- transmit said request to the system, and
- process a response received from the system.

15. The network element of claim 14, adapted to
- generate and transmit the request to the system in response to receiving a request from the source network element, and to
- transmit a response to the source network element depending on the response received from the system.

## Patentansprüche

1. Verfahren zur Steuerung der Datenkommunikation innerhalb eines Netzwerks mit einer Vielzahl von Netzwerkelementen, welche zum Zweck der Datenkommunikation miteinander verbunden sind, wobei
- ein zentrales Netzwerkelement (100), das einem Netzwerkanbieter zugehörig ist, eine Repräsentation (130) der Netzwerks erzeugt, indem es Netzwerkinformationen (110) abruft und/oder indem es die Datenkommunikation innerhalb des Netzwerks überwacht, wobei die Repräsentation des Netzwerks Informationen umfasst, die zu den Kommunikationspfaden zwischen Paaren von Knoten des Netzwerks zugehörig sind,
- Änderungen in dem Netzwerk erfasst werden, indem kontinuierlich Netzwerkinformationen (110) abgerufen werden und/oder die Datenkommunikation innerhalb des Netzwerks überwacht wird und die Repräsentation (130) des Netzwerks in Abhängigkeit von den erfassten Änderungen aktualisiert wird,
- von einem Client-Netzwerkelement (180) eine Anforderung an das zentrale Netzwerkelement (100) übertragen wird, wobei die Anforderung Informationen umfasst, welche ein Quell-Netzwerkelement und mindestens zwei Ziel-Netzwerkelemente identifiziert,
- für jedes identifizierte Ziel-Netzwerkelement ein Rankingwert für den Kommunikationspfad zwischen dem Quell-Netzwerkelement und dem jeweiligen Ziel-Netzwerkelement von dem zentralen Netzwerkelement (100) auf der Grundlage der Repräsentation (130) des Netzwerks bestimmt wird,
- eine sortierte Liste der identifizierten Ziel-Netzwerkelemente auf der Grundlage der jeweiligen Rankingwerte erzeugt wird,
- die sortierte Liste von dem zentralen Netzwerkelement (100) an das Client-Netzwerkelement (180) übertragen wird und
- auf der Grundlage der sortierten Liste zumindest eines der Ziel-Netzwerkelemente für die Datenkommunikation mit dem Quell-Netzwerkelement ausgewählt wird.

2. Verfahren nach Anspruch 1, wobei das Client-Netzwerkelement die an das zentrale Netzwerkelement (100) zu übertragende Anforderung in Ansprechen auf den Empfang einer Anforderung von dem Quell-Netzwerkelement erzeugt, und wobei das Client-Netzwerkelement in Abhängigkeit von der sortierten Liste, die von dem zentralen Netzwerkelement (100) bereitgestellt wird, eine Antwort an das Quell-Netzwerkelement überträgt.

3. Verfahren nach einem der Ansprüche 1 oder 2, wobei die von dem Client-Netzwerkelement (180) übertragene Anforderung in ein vordefiniertes unifiziertes Format konvertiert wird.

4. Verfahren nach einem der vorhergehenden Ansprüche, wobei von dem zentralen Netzwerkelement (100) nur Anfragen verarbeitet werden, welche von einem autorisierten Client-Netzwerkelement empfangen werden und welche ein autorisiertes Quell-Netzwerkelement identifizieren, und wobei die Autorisierung des Client-Netzwerkelements und/oder des Quell-Netzwerkelements in Abhängigkeit von einer in der Anfrage enthaltenen Identifikation des Client-Netzwerkelements und/oder von einer in der Anfrage enthaltenen Identifikation des Quell-Netzwerkelements geprüft wird.

5. Verfahren nach einem der vorhergehenden Ansprüche, wobei die Rankingwerte mittels einer vordefinierten Rankingfunktion, welche aus einem vordefinierten Satz von Rankingfunktionen auf der Grundlage von Informationen in der von dem Client-Netzwerkelement übertragenen Anforderung ausgewählt wird, bestimmt werden.

6. Verfahren nach Anspruch 5, wobei zumindest eine vordefinierte Rankingfunktion dynamisch in Abhängigkeit von den erfassten Änderungen am Netzwerk angepasst wird.

7. Verfahren nach einem der vorhergehenden Ansprüche, wobei eine Vielzahl von Anfragen analysiert und statistische Informationen über die Häufigkeit, mit welcher Anfragen von individuellen Client-Netzwerkelementen empfangen werden, und/oder über die Häufigkeit, mit welcher individuelle Client-Netzwerkelemente und/oder individuelle Ziel-Netzwerkelemente in den jeweiligen Anfragen identifiziert werden, bestimmt werden, und wobei die statistischen Informationen zur Bestimmung der Rankingwerte verwendet werden.

8. System zur Steuerung der Datenkommunikation innerhalb eines Netzwerks mit einer Vielzahl von Netzwerkelementen, welche zum Zweck der Datenkommunikation miteinander verbunden sind, wobei das System in zumindest einem zentralen Netzwerkelement (100), das einem Netzwerkanbieter zugehörig ist, angeordnet ist, umfassend
- ein Abruf-Subsystem (112) zum Abrufen von Netzwerkinformationen (110) und/oder zur Überwachung der Datenkommunikation innerhalb des Netzwerks,
- ein Netzplan-Generator-Subsystem (120) zur Erzeugung und Aktualisierung einer Repräsentation des Netzwerks auf der Grundlage von Daten, die von dem Abruf-Subsystem empfangen wurden, wobei die Repräsentation des Netzwerks Informationen über die Kommunikationspfade zwischen Paaren von Knoten des Netzwerks umfasst,
- eine Netzplan-Datenbank zur Speicherung der Repräsentation (130) des Netzwerks,
- ein Abfragemanager-Subsystem (140) zum Empfangen, Verarbeiten und Reagieren auf eine Anforderung von einem Client-Netzwerkelement (180), wobei die Anforderung Informationen umfasst, welche ein Quell-Netzwerkelement und mindestens zwei Ziel-Netzwerkelemente identifiziert,
- ein Pfadranking-Subsystem (150), welches angepasst ist, um für jedes Ziel-Netzwerkelement, das in einer Anforderung von einem Client-Netzwerkelement (180) identifiziert wird, einen Rankingwert für den Kommunikationspfad zwischen dem Quell-Netzwerkelement (180) und dem jeweiligen Ziel-Netzwerkelement auf der Grundlage der gespeicherten Repräsentation (130) des Netzwerks zu bestimmen, wobei
- das Abfragemanager-Subsystem (140) angepasst ist, eine Antwort auf eine Anforderung zu erzeugen und die Antwort an das Client-Netzwerkelement (180), von welchem die Anforderung empfangen wurde, zu übertragen, wobei die Antwort eine sortierte Liste der in der Anforderung identifizierten Ziel-Netzwerkelemente umfasst, und wobei die Liste auf der Grundlage jeweiliger, von dem Pfadranking-Subsystem (150) bereitgestellter Rankingwerte bestimmt wird.

9. System nach Anspruch 8, des Weiteren umfassend ein Anforderungsübersetzungs-Subsystem (170) zur Umwandlung einer von dem Client-Netzwerkelement (180) empfangenen Anforderung in eine Anforderung mit einem vordefinierten unifizierten Format.

10. System nach einem der Ansprüche 8 oder 9, wobei das Pfadranking-Subsystem (150) angepasst ist, um die Rankingwerte mittels einer vordefinierten Rankingfunktion, welche von dem Pfadranking-Subsystem (150) aus einem vordefinierten Satz von Rankingfunktionen auf der Grundlage von Informationen in der von dem Client-Netzwerkelement (180) übertragenen Anforderung ausgewählt wird, zu bestimmen.

11. System nach Anspruch 10, wobei zumindest eine vordefinierte Rankingfunktion dynamisch in Abhängigkeit von den erfassten Änderungen am Netzwerk angepasst wird.

12. System nach einem der Ansprüche 8 bis 11, des Weiteren umfassend ein Frequent-hitter-Erfassungs-Subsystem, welches angepasst ist, eine Vielzahl von Anfragen zu analysieren und statistische Informationen über die Häufigkeit, mit welcher Anfragen von individuellen Client-Netzwerkelementen empfangen werden, und/oder über die Häufigkeit, mit welcher individuelle Client-Netzwerkelemente und/oder individuelle Ziel-Netzwerkelemente in den jeweiligen Anfragen identifiziert werden, zu bestimmen, und wobei die statistischen Informationen an das Pfadranking-Subsystem (150) zur Bestimmung der Rankingwerte geliefert werden.

13. System nach einem der Ansprüche 8 bis 12, umfassend ein Backup-Subsystem, welches angepasst ist, zu vordefinierten Zeiten eine Sicherung der Repräsentation (180) des Netzwerks zu erstellen, jegliche erfassten Änderungen in dem Netzwerk seit der letzten Sicherung zu speichern und bei einem Ausfall die Repräsentation (130) des Netzwerks auf der Grundlage der letzten Sicherung und der gespeicherten Änderungen abzurufen.

14. Netzwerkelement zur Kommunikation mit einem System zu Steuerung der Datenkommunikation nach einem der Ansprüche 8 bis 13, angepasst um
- eine Anforderung zu erzeugen, wobei die Anforderung Informationen umfasst, welche ein Quell-Netzwerkelement und mindestens zwei Ziel-Netzwerkelemente identifiziert, und Informationen, um das System in die Lage zu versetzen, eine Rankingfunktion aus einem Satz vordefinierter Rankingfunktionen auszuwählen,
- die Anforderung an das System zu übertragen, und
- eine von dem System empfangene Antwort zu verarbeiten.

15. Netzwerkelement nach Anspruch 14, angepasst um
- die Anforderung in Ansprechen auf den Empfang einer Anforderung von dem Quell-Netzwerkelement zu erzeugen und an das System zu übertragen, und
- eine Antwort in Abhängigkeit von der von dem System empfangenen Antwort an das Quell-Netzwerkelement zu übertragen.

## Revendications

1. Procédé de commande d'une communication de données dans un réseau avec de multiples éléments de réseau qui, aux fins de la communication de données, sont interconnectés, dans lequel
- un élément de réseau central (100) associé à un fournisseur de réseau génère une représentation (130) du réseau en récupérant des informations de réseau (110) et/ou en surveillant la communication de données sur le réseau, dans lequel ladite représentation du réseau comprend des informations associées à des chemins de communication entre des paires de noeuds du réseau,
- des modifications dans le réseau sont détectées en récupérant en continu des informations de réseau (110) et/ou en surveillant la communication de données sur le réseau, et la représentation (130) du réseau est mise à jour en fonction des modifications détectées,
- à partir d'un élément de réseau client (180), une demande est transmise à l'élément de réseau central (100), dans lequel ladite demande comprend des informations qui identifient un élément de réseau source et au moins deux éléments de réseau de destination,
- pour chaque élément de réseau de destination identifié, une valeur de classement pour le chemin de communication entre l'élément de réseau source et l'élément de réseau de destination respectif est déterminée par l'élément de réseau central (100) sur la base de la représentation (130) du réseau,
- une liste ordonnée d'éléments de réseau de destination identifiés est générée en fonction des valeurs de classement respectives,
- ladite liste ordonnée est transmise à l'élément de réseau client (180) à partir de l'élément de réseau central (100), et
- sur la base de la liste ordonnée, au moins un des éléments de réseau de destination est sélectionné pour la communication de données avec l'élément de réseau source.

2. Procédé selon la revendication 1, dans lequel l'élément de réseau client génère la demande devant être transmise à l'élément de réseau central (100) en réponse à la réception d'une demande provenant de l'élément de réseau source, et dans lequel l'élément de réseau client transmet une réponse à l'élément de réseau source selon la liste ordonnée fournie par l'élément de réseau central (100).

3. Procédé selon l'une quelconque des revendications 1 ou 2, dans lequel la demande transmise par l'élément de réseau client (180) est convertie en une demande d'un format unifié prédéfini.

4. Procédé selon l'une quelconque des revendications précédentes, dans lequel seules sont traitées par l'élément de réseau central (100) les demandes qui proviennent d'un élément de réseau client autorisé et qui identifient un élément de réseau source autorisé, et dans lequel l'autorisation de l'élément de réseau client et/ou de l'élément de réseau source est vérifiée en fonction d'une identification de l'élément de réseau client et/ou d'une identification de l'élément de réseau source contenue dans la demande.

5. Procédé selon l'une quelconque des revendications précédentes, dans lequel les valeurs de classement sont déterminées au moyen d'une fonction de classement prédéfinie qui est choisie parmi un ensemble prédéfini de fonctions de classement sur la base d'informations dans la demande transmise par l'élément de réseau client.

6. Procédé selon la revendication 5, dans lequel au moins une fonction de classement prédéfinie est adaptée dynamiquement en fonction des modifications détectées du réseau.

7. Procédé selon l'une quelconque des revendications précédentes, dans lequel une pluralité de demandes sont analysées et des informations statistiques sont déterminées sur la fréquence à laquelle des demandes sont reçues en provenance d'éléments de réseau client individuels et/ou sur la fréquence à laquelle des éléments de réseau source individuels et/ou des éléments de réseau de destination individuels sont identifiés dans les demandes respectives, et dans lequel lesdites informations statistiques sont utilisées pour déterminer les valeurs de classement.

8. Système de commande d'une communication de données sur un réseau avec de multiples éléments de réseau qui, aux fins de la communication de données, sont interconnectés, ledit système étant agencé dans au moins un élément de réseau central (100) associé à un fournisseur de réseau, comprenant
- un sous-système de récupération (112) destiné à récupérer des informations de réseau (110) et/ou à surveiller la communication de données sur le réseau,
- un sous-système de génération de carte de réseau (120) destiné à générer et à mettre à jour une représentation du réseau sur la base de données reçues provenant du sous-système de récupération, dans lequel ladite représentation du réseau comprend des informations associées à des chemins de communication entre des paires de noeuds du réseau,
- une base de données de carte réseau destinée à enregistrer la représentation (130) du réseau,
- un sous-système de gestion de demande (140) destiné à recevoir, traiter et répondre à une demande provenant d'un élément de réseau client (180), dans lequel ladite demande comprend des informations qui identifient un élément de réseau source et au moins deux éléments de réseau de destination,
- un sous-système de classement de chemin (150) qui est conçu pour déterminer, pour chaque élément de réseau de destination identifié dans une demande provenant d'un élément de réseau client (180), une valeur de classement pour le chemin de communication entre l'élément de réseau source (180) et l'élément de réseau de destination respectif sur la base de la représentation enregistrée (130) du réseau, dans lequel
- le sous-système de gestion de demande (140) est conçu pour générer une réponse à une demande et transmettre la réponse à l'élément de réseau client (180) à partir duquel la demande a été reçue, dans lequel ladite réponse comprend une liste ordonnée des éléments de réseau de destination identifiés dans la demande, et dans lequel ladite liste est déterminée sur la base de valeurs de classement respectives fournies par le sous-système de classement de chemin (150).

9. Système selon la revendication 8, comprenant en outre un sous-système de traduction de demande (170) destiné à convertir une demande reçue provenant de l'élément de réseau client (180) en une demande d'un format unifié prédéfini.

10. Système selon l'une quelconque des revendications 8 ou 9, dans lequel le sous-système de classement de chemin (150) est conçu pour déterminer les valeurs de classement au moyen d'une fonction de classement prédéfinie qui est choisie par le sous-système de classement de chemin (150) parmi un ensemble prédéfini de fonctions de classement sur la base d'informations dans la demande transmise par l'élément de réseau client (180).

11. Système selon la revendication 10, dans lequel au moins une fonction de classement prédéfinie est adaptée dynamiquement en fonction des modifications détectées du réseau.

12. Système selon l'une quelconque des revendications 8 à 11, comprenant en outre un sous-système de détection de fréquence d'occurrence qui est conçu pour analyser une pluralité de demandes et pour déterminer des informations statistiques sur la fréquence à laquelle des demandes sont reçues en provenance d'éléments de réseau client individuels et/ou sur la fréquence à laquelle des éléments de réseau source individuels et/ou des éléments de réseau de destination individuels sont identifiés dans les demandes respectives, et dans lequel lesdites informations statistiques sont fournies au sous-système de classement de chemin (150) pour déterminer les valeurs de classement.

13. Système selon l'une quelconque des revendications 8 à 12, comprenant un sous-système de sauvegarde qui est conçu pour effectuer une sauvegarde de la représentation (180) du réseau à des moments prédéfinis, pour enregistrer les modifications détectées dans le réseau depuis la dernière sauvegarde, et pour récupérer la représentation (130) du réseau sur la base de la dernière sauvegarde et des modifications enregistrées dans le cas d'une défaillance.

14. Élément de réseau destiné à communiquer avec un système de commande d'une communication de données selon l'une quelconque des revendications 8 à 13, conçu pour
- générer une demande, dans lequel ladite demande comprend des informations qui identifient un élément de réseau source et au moins deux éléments de réseau de destination, et des informations pour permettre au système de sélectionner une fonction de classement parmi un ensemble de fonctions de classement prédéfinies,
- transmettre ladite demande au système, et
- traiter une réponse reçue provenant du système.

15. Élément de réseau selon la revendication 14, conçu pour
- générer et transmettre la demande au système en réponse à la réception d'une demande provenant de l'élément de réseau source, et pour
- transmettre une réponse à l'élément de réseau source en fonction de la réponse reçue du système.
